(19)

**Europäisches Patentamt**

**European Patent Office**

**Office européen des brevets**

(11)  **EP 3 253 166 A1**

(12)  **EUROPEAN PATENT APPLICATION**

(43)  Date of publication:
06.12.2017  Bulletin 2017/49

(51)  Int Cl.:
*H04W 74/08* (2009.01)

(21)  Application number: **16305628.6**

(22)  Date of filing: **31.05.2016**

| | |
|---|---|
| (84)  Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71)  Applicant: **ALCATEL LUCENT**<br>**92100 Boulogne-Billancourt (FR)**<br><br>(72)  Inventor: **FAHLDIECK, Torsten**<br>**70435 Stuttgart (DE)**<br><br>(74)  Representative: **2SPL Patentanwälte PartG mbB**<br>**Postfach 15 17 23**<br>**80050 München (DE)** |

(54)  **APPARATUSES, METHODS, AND COMPUTER PROGRAMS FOR A BASE STATION TRANSCEIVER AND A MOBILE TRANSCEIVER**

(57)  Embodiments provide apparatuses, methods and computer programs for a base station transceiver (100) and a mobile transceiver (200). An apparatus (10) for a base station transceiver (100) of a mobile communication system (300) comprises a transceiver module (12) to wirelessly communicate with the one or more mobile transceivers (200), and a control module (14) to control the transceiver module (12) to transmit data to the one or more mobile transceivers (200) and receive data from the one or more mobile transceivers (200). The control module (14) is configured to receive information related to an uplink transmission request from a mobile transceiver (200), and to transmit information related to a set of radio resources for uplink transmission to the mobile transceiver (200). The information related to the set of radio resources comprises information related to primary radio resources for a first uplink access attempt of the mobile transceiver (200) on the first frequency carrier, and information related to secondary radio resources for a second uplink access attempt of the mobile transceiver (200) on the second frequency carrier in case the first uplink access attempt fails. The control module (14) is configured to receive uplink data from the mobile transceiver (200) on the primary radio resources from the first uplink access attempt of the mobile transceiver (200) or to receive the uplink data from the mobile transceiver (200) on the secondary radio resources from the second uplink access attempt of the mobile transceiver (200) in case the first uplink access attempt fails.

Fig. 1

**Description**

Technical Field

Embodiments relate to apparatuses, methods and computer programs for a base station transceiver and a mobile transceiver, more particularly, but not exclusively to a concept of scheduling primary and backup radio resources in an unlicensed spectrum.

Background

This section introduces aspects that may be helpful in facilitating a better understanding of the invention(s). Accordingly, the statements of this section are to be read in this light and are not to be understood as admissions about what is in the prior art or what is not in the prior art.

With the increasing demand for data services, wireless systems tend to use more and more bandwidth and higher carrier frequencies. For example, Fifth Generation (5G) wireless access may be expected to embrace mm-Wave frequencies to provide multi-Gbps data rates, typically in femto, pico, or metro cell type of deployments. The allocation of additional spectra is one strategy among others to improve the performance of wireless access systems. Beside the licensed spectrum several unlicensed spectrum ranges are available. The additional usage of these spectrums offers huge capacity improvements for wireless access networks like Long Term Evolution (LTE) or successors like 5th Generation (5G) systems. The additional usage of unlicensed spectrum provides advantages like a free of charge usage for an operator.

The specification of LTE in unlicensed band (LTE-U) focuses first on downlink transmission only (Supplemental DownLink (SDL)), which fits to the asymmetric traffic characteristic in the internet, where users produce more downlink data than uplink data. But with the upcoming WEB 2.0 services and cloud services the uplink traffic increases and the use of unlicensed spectrum for uplink transmission may be desired to overcome transmission capacity bottlenecks.

In unlicensed spectrum other transceivers, e.g. Wireless Fidelity (WiFi) network nodes, may access the wireless channels (spectrum) in a random manner. This may contradict the centralized concepts of cellular systems, where a BaseStation (BS) may have full control of wireless access in its cell range. If an LTE system would operate in an unlicensed band, it has to coexist with other wireless network nodes which use, for example, WiFi technology to get wireless access.

Several aspects would arise if an unmodified LTE system would operate on unlicensed bands. For example, Wifi terminals may transmit randomly data packets if they detect a free carrier. This may lead to interference between the Wifi terminals and the LTE terminals and base stations. The performance of both wireless access systems (LTE-U and Wifi) may be degraded or affected. Furthermore, regulations in some regions may require Listen Before Talk (LBT) mechanisms for the access to unlicensed band. Furthermore a maximum channel occupancy time may be required, which defines the maximum amount of time where a particular network node may occupy a given spectrum range. So the operation of an unmodified LTE system in unlicensed bands may not be feasible in these regions.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs for a base station transceiver and a mobile transceiver. Embodiments are based on the finding that providing a mobile terminal with multiple options of transmission resources may reduce collision in unlicensed spectrum. For example, for uplink access in a LTE system, a User Equipment (UE) may send a request on a random access channel and the base station responds with an uplink grant. Then the UE may transmit data in uplink direction according to the previously received uplink grant without sensing the radio power. This may violate access procedures for unlicensed bands. Otherwise, if the UE performs LBT before sending data in uplink direction and the LBT fails because a Wifi node is using the carrier, the UE might not use this uplink transmit opportunity and the complete uplink procedure fails. In this case the uplink transmit procedure may be repeated, which may lead to additional delays and wastage of radio resources. Embodiments may therewith provide the UEs with alternative, secondary or fallback/backup radio resources, which can be used if primary resources are not available. The UEs may then take a second (third, fourth, etc.) transmission attempt without repeating the request-grant procedure.

Embodiments provide an apparatus for a base station transceiver of a mobile communication system. Embodiments also provide a base station transceiver with the base station transceiver apparatus. The base station transceiver is configured to serve one or more mobile transceivers of the mobile communication system using at least a first frequency carrier and a second frequency carrier. The apparatus comprises a transceiver module, which is configured to wirelessly communicate with the one or more mobile transceivers. The apparatus further comprises a control module, which is configured to control the transceiver module to transmit data to the one or more mobile transceivers and receive data from the one or more mobile transceivers. The control module is configured to receive information related to an uplink transmission request from a mobile transceiver. The control module is configured to transmit information related to a set of radio resources for uplink transmission to the mobile transceiver. The information related to the set of radio resources comprises information related to primary radio resources for a first uplink access attempt of the mobile transceiver on the first frequency carrier. The information related to the set of radio resources further comprises information related to secondary radio resources for a second uplink access attempt of the mobile transceiver on the second frequency carrier in case the first uplink access attempt fails. The control module is configured to receive uplink data from the mobile transceiver on the primary radio resources from the first uplink access attempt of the mobile transceiver or to receive the uplink data from the mobile transceiver on the secondary radio resources from the second uplink access attempt of the mobile transceiver in case the first uplink access attempt fails. Embodiments allow a base station transceiver to provide an uplink transmission grant with a backup resource to a mobile terminal.

Embodiments further provide an apparatus for a mobile transceiver of a mobile communication system. Embodiments also provide a mobile transceiver comprising the mobile transceiver apparatus. Another embodiment is a mobile communication system comprising an embodiment of the base station transceiver and an embodiment of the mobile transceiver. The mobile transceiver is configured to be served by one or more base station transceivers of the mobile communication system using at least a first frequency carrier and a second frequency carrier. The mobile transceiver apparatus comprises a transceiver module to wirelessly communicate with the one or more base station transceivers. The mobile transceiver apparatus further comprises a control module to control the transceiver module to transmit data to the one or more base station transceivers and receive data from the one or more base station transceivers. The control module is further configured to transmit information related to an uplink transmission request to the one or more base station transceivers. The control module is further configured to receive information related to a set of radio resources for uplink transmission from the one or more base station transceivers. The information related to the set of radio resources comprises information related to primary radio resources for a first uplink access attempt of the mobile transceiver. The information related to the set of radio resources further comprises information related to secondary radio resources for a second uplink access attempt of the mobile transceiver in case the first uplink access attempt fails. The control module is further configured to check whether the primary radio resources are available for transmission and to transmit uplink data to the one or more base station transceivers on the primary radio resources for the first uplink access attempt if the primary radio resources are available. The control module is further configured to, if the primary radio resources are not available for transmission, check whether the secondary radio resources are available for transmission and transmit the uplink data to the one or more base station transceivers on the secondary radio resources for the second uplink access attempt in case the first uplink transmission attempt fails and the secondary radio resources are available for transmission. Embodiments may enable mobile terminals to be provided with one or more backup resource grants, which can be used in case a primary granted resource is not available. Signaling procedures may be more efficient in embodiments as each backup or secondary resource may provide another chance for a successful uplink data transmission without repeating the request and grant procedure.

In further embodiments at least one of the first and second frequency carriers lies in an unlicensed spectrum. Embodiments may allow a more efficient utilization of unlicensed spectrum. In some embodiments the information related to the set of radio resources comprises information related to at least one further radio resource for at least one further access attempt of the mobile transceiver in case the second transmission attempt fails. Embodiments may allow a number of access attempts by providing a number of backup or alternative radio resources for data transmission. Embodiments may allow adaptation or optimization of radio resource management. In further embodiments the control module of the base station transceiver apparatus is configured to adapt a number of further resources for further access attempts comprised in the information related to the set of radio resources based on information related to a load condition of the first and second frequency carriers. Embodiments may allow adapting the number of backup radio resources, which generate signaling, to a load condition of the respective carriers. In some embodiments the control module may be configured to determine the information related to the load condition of the first and second frequency carriers based on monitoring successful access attempts of the one or more mobile transceivers on the first and second frequency carriers. By evaluating the number of failed or successful access attempts of mobile terminals the base station transceiver apparatus may determine the load condition of the respective carriers as other transceivers, for example of other communication systems, may also be active in the respective carriers.

In some embodiments at least one of the primary radio resources and the secondary radio resources may comprise information related to one or more channels available on the first or second frequency carrier. The radio resources of the respective carriers may be subdivided into channels and the channels may then determine a granularity of the resource assignment. In further embodiments the radio resources for an access attempt may correspond to a resource block, one or more subcarriers, one or more radio frames, radio sub-frames, radio slots, one or more code sequences potentially with a respective spreading factor, one or more spatial resources, such as spatial sub-channels, spatial precoding vectors, etc. For example, the secondary resources indicate radio resources, which are delayed with respect to the primary radio resources.

In some embodiments the control module of the base station transceiver apparatus may be configured to receive information related to an uplink transmission request from multiple mobile transceivers. The control module may be configured to transmit information related to multiple sets of radio resources for uplink transmission to the multiple mobile transceivers. Embodiments may allow coordination of primary and secondary radio resource among multiple mobile terminals. The control module may be further configured to sense activity of transceivers of another mobile communication system on the first and second frequency carriers and to determine the information related to the set of radio resources based on the activity on the first and second frequency carriers. At least some embodiments may allow coordination among different systems or radio access technologies.

In some embodiments the control module of the mobile transceiver apparatus is configured to carry out a clear carrier assessment to check the radio resources before data transmission based on a carrier related to the information related to the radio resources. Hence, in embodiments a mobile transceiver may check availability of radio resources (on a carrier) before starting a data transmission. A transmission attempt may fail if the clear carrier assessment determines the carrier to be unavailable. In further embodiments the control module of the mobile transceiver apparatus may be configured to obtain information related to a new set of radio resources, e.g. to automatically receive such information from the base station transceiver, or to transmit information related to a new uplink transmission request to the one or more base station transceivers in case all transmission attempts based on the information related to the set of radio resources failed. Embodiments may prevent access of radio resources, which have not been previously assigned by a base station transceiver and therefore allow coordination or management of these radio resources, in particular, on carriers in unlicensed spectrum.

Embodiments further provide a method for a base station transceiver of a mobile communication system. The base station transceiver is configured to serve one or more mobile transceivers of the mobile communication system using at least a first frequency carrier and a second frequency carrier. The method comprises receiving information related to an uplink transmission request from a mobile transceiver and transmitting information related to a set of radio resources for uplink transmission to the mobile transceiver. The information related to the set of radio resources comprises information related to primary radio resources for a first uplink access attempt of the mobile transceiver on the first frequency carrier. The information related to the set of radio resources further comprises information related to secondary radio resources for a second uplink access attempt of the mobile transceiver on the second frequency carrier in case the first uplink access attempt fails. The method further comprises receiving uplink data from the mobile transceiver on the primary radio resources from the first uplink access attempt of the mobile transceiver, or receiving the uplink data from the mobile transceiver on the secondary radio resources from the second uplink access attempt of the mobile transceiver in case the first uplink access attempt fails.

Embodiments provide a method for a mobile transceiver of a mobile communication system. The mobile transceiver is configured to be served by one or more base station transceivers of the mobile communication system using at least a first frequency carrier and a second frequency carrier. The method comprises transmitting information related to an uplink transmission request to the one or more base station transceivers. The method further comprises receiving information related to a set of radio resources for uplink transmission from the one or more base station transceivers. The information related to the set of radio resources comprises information related to primary radio resources for a first uplink access attempt of the mobile transceiver. The information related to the set of radio resources comprises information related to secondary radio resources for a second uplink access attempt of the mobile transceiver in case the first uplink access attempt fails. The method further comprises checking whether the primary radio resources are available for transmission and transmitting uplink data to the one or more base station transceivers on the primary radio resources for the first uplink access attempt if the primary radio resources are available. The method further comprises, if the primary radio resources are not available for transmission, checking whether the secondary radio resources are available for transmission and transmitting the uplink data to the one or more base station transceivers on the secondary radio resources for the second uplink access attempt in case the first uplink transmission attempt fails and the secondary radio resources are available for transmission.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates an embodiment of an apparatus for a base station transceiver and an apparatus for a mobile transceiver;

Fig. 2 illustrates an uplink grant procedure in an embodiment;

Fig. 3 illustrates an uplink frame timing in an embodiment;

Fig. 4 shows a block diagram of a flow chart of an embodiment of a method for a base station transceiver and a mobile transceiver;

Fig. 5 shows a scheme for channel and delay configuration in an embodiment;

Fig. 6 illustrates generation of an extended grant in an embodiment;

Fig. 7 shows LTE-U and Wifi traffic static channel assignment in an embodiment;

Fig. 8 shows redundant LTE-U and Wifi traffic static channel assignment in an embodiment;

Fig. 9 shows a block diagram of a flow chart of an embodiment of a method for a base station transceiver; and

Fig. 10 shows a block diagram of a flow chart of an embodiment of a method for a mobile transceiver.

Description of Embodiments

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may, for example, address the problems of a mechanism for uplink access in unlicensed bands. As a basis for this approach, Licensed Assisted Access (LAA) may be used. The means that a Primary Component Carrier (PCC) may operate in licensed bands and a Secondary Component Carriers (SCCs) may operate in unlicensed bands. Some embodiments may operate similar to a regular LTE uplink access with some extensions and modifications.

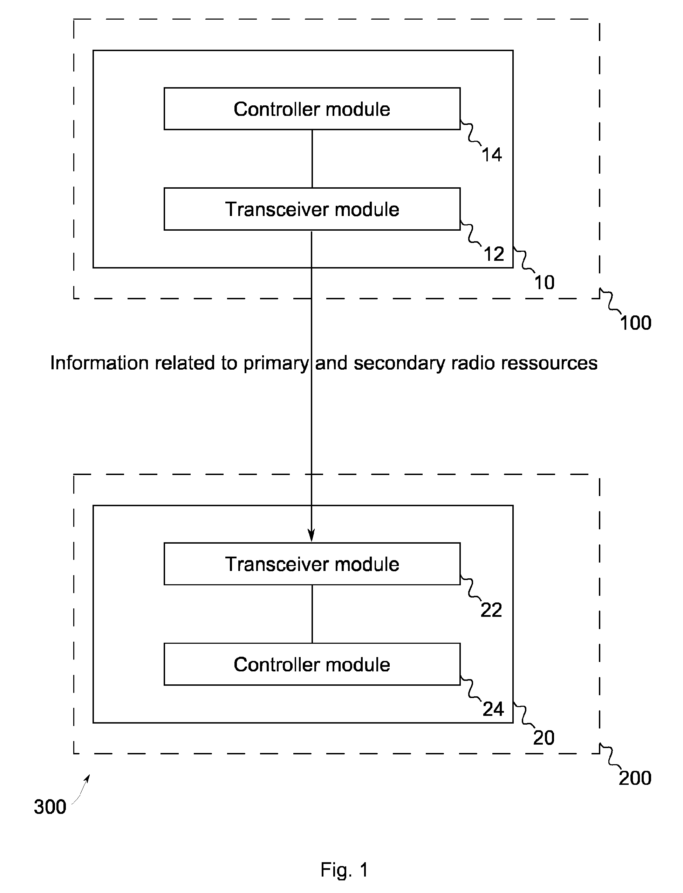

Fig. 1 illustrates an embodiment of an apparatus 10 for a base station transceiver 100 and an apparatus 20 for a mobile transceiver 200 in a mobile communication system 300. The mobile communication system 300 may, for example, correspond to one of the Third Generation Partnership Project (3GPP)-standardized mobile communication networks, where the term mobile communication system 300 is used synonymously to mobile communication network. The mobile or wireless communication system 300 may correspond to a mobile communication system of the 5th Generation (5G) and may use mm-Wave technology. The mobile communication system 300 may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Interoperability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver 100 can be operable to communicate with one or more active mobile transceivers 200 and a base station transceiver 100 can be located in or adjacent to a coverage area of another base station transceiver, e.g. a macro cell base station transceiver or small cell base station transceiver. Hence, embodiments may provide a mobile communication system 400 comprising one or more mobile transceivers 200 and one or more base station transceivers 100, wherein the base station transceivers 100 may establish macro cells or small cells, as e.g. pico-, metro-, or femto cells. A mobile transceiver 200 may correspond to a smartphone, a cell phone, user equipment, a laptop, a notebook, a personal computer, a Personal Digital Assistant (PDA), a Universal Serial Bus (USB) -stick, a car, etc. A mobile transceiver 200 may also be referred to as User Equipment (UE) or mobile in line with the 3GPP terminology.

A base station transceiver 100 can be located in the fixed or stationary part of the network or system. A base station transceiver 100 may correspond to a remote radio head, a transmission point, an access point, a macro cell, a small cell, a micro cell, a femto cell, a metro cell etc. A base station transceiver 100 can be a wireless interface of a wired network, which enables transmission of radio signals to a UE or mobile transceiver 200. Such a radio signal may comply with radio signals as, for example, standardized by 3GPP or, generally, in line with one or more of the above listed systems. Thus, a base station transceiver 100 may correspond to a NodeB, an eNodeB, a Base Transceiver Station (BTS), an access point, a remote radio head, a transmission point etc., which may be further subdivided in a remote unit and a central unit.

A mobile transceiver 200 can be associated with a base station transceiver 100 or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

Fig. 1 also shows embodiments of a base station transceiver 100 and a mobile transceiver 200 in broken lines to indicate that they are optional for the embodiments providing the apparatuses 10 and 20. Fig. 1 further illustrates an embodiment of a system 300 comprising a base station transceiver 100 and a mobile transceiver 200. In the embodiment shown in Fig. 1 the base station transceiver 100 is configured to serve one or more mobile transceivers 200 of the mobile communication system 300 using at least a first frequency carrier and a second frequency carrier. The apparatus 10 for the base station transceiver 100 of the mobile communication system 300 comprises a transceiver module 12 to wirelessly communicate with the one or more mobile transceivers 200. The transceiver module 12 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The base station transceiver apparatus 10 further comprises a control module 14, which is coupled to the transceiver module 12. In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a microcontroller, etc.

In the embodiment depicted in Fig. 1 the control module 14 is configured to control the transceiver module 12 to transmit data to the one or more mobile transceivers 200 and receive data from the one or more mobile transceivers 200. The control module 14 is configured to receive information related to an uplink transmission request from a mobile transceiver 200. The control module 14 is further configured to transmit information related to a set of radio resources for uplink transmission to the mobile transceiver 200. The information related to the set of radio resources comprises information related to primary radio resources for a first uplink access attempt of the mobile transceiver 200 on the first frequency carrier, and the information related to the set of radio resources comprises information related to secondary radio resources for a second uplink access attempt of the mobile transceiver 200 on the second frequency carrier in case the first uplink access attempt fails. The control module 14 is configured to receive uplink data from the mobile transceiver 200 on the primary radio resources from the first uplink access attempt of the mobile transceiver 200 or receive the uplink data from the mobile transceiver 200 on the secondary radio resources from the second uplink access attempt of the mobile transceiver 200 in case the first uplink access attempt fails. In embodiments the information may correspond to one or more digital or analog values or signals, which may transport a corresponding indication or signaling between the base station transceiver 100 and the mobile transceiver 200.

As further shown in Fig. 1 an embodiment of the mobile transceiver apparatus 20 comprises a transceiver module 22 and a control module 24, which are coupled to each other. In embodiments the transceiver module 12 may be implemented in correspondence with the above described transceiver module 12. In embodiments the control module 24 may be implemented in correspondence with the above described control module 14. The mobile transceiver 200 is configured to be served by one or more base station transceivers 100 of the mobile communication system 300 using at least the first frequency carrier and the second frequency carrier. The apparatus 20 for the mobile transceiver 200 of the mobile communication system 300 comprises the transceiver module 22 to wirelessly communicate with the one or more base station transceivers 100. The control module 24 is configured to control the transceiver module 22 to transmit data to the one or more base station transceivers 100 and receive data from the one or more base station transceivers 100.

The control module 24 is configured to transmit information related to an uplink transmission request to the one or more base station transceivers 100. The control module 24 is configured to receive information related to a set of radio resources for uplink transmission from the one or more base station transceivers 100. The information related to the set of radio resources comprises information related to primary radio resources for a first uplink access attempt of the mobile transceiver 200. The information related to the set of radio resources further comprises information related to secondary radio resources for a second uplink access attempt of the mobile transceiver 200 in case the first uplink access attempt fails. The control module 24 is configured to check whether the primary radio resources are available for transmission and transmit uplink data to the one or more base station transceivers 100 on the primary radio resources for the first uplink access attempt if the primary radio resources are available. The control module 24 is configured to, if the primary radio resources are not available for transmission, check whether the secondary radio resources are available for transmission and transmit the uplink data to the one or more base station transceivers 100 on the secondary radio resources for the second uplink access attempt in case the first uplink transmission attempt fails and the secondary radio resources are available for transmission.

Here and in the following radio resources of the respective carriers may correspond to any radio resources conceivable on these carriers and they may use the same or different granularities on the respective carriers. The radio resources for an access attempt may correspond to a Resource Block (RB as in LTE/LTE-A/LTE-U), one or more carriers, subcarriers, one or more radio frames, radio sub-frames, radio slots, one or more code sequences potentially with a respective spreading factor, one or more spatial resources, such as spatial sub-channels, spatial precoding vectors, any combination thereof, etc. In the sequel an embodiment will be described, in which the secondary resources indicate radio resources, which are delayed with respect to the primary radio resources and assigned to a different frequency carrier.

In a further embodiment at least one of the first and second frequency carriers lies in an unlicensed spectrum. In the following some embodiments will be described assuming the mobile communication system 300 to be an LTE system with at least an LTE-U component/carrier. Other embodiments may as well as use other mobile communication systems 300.

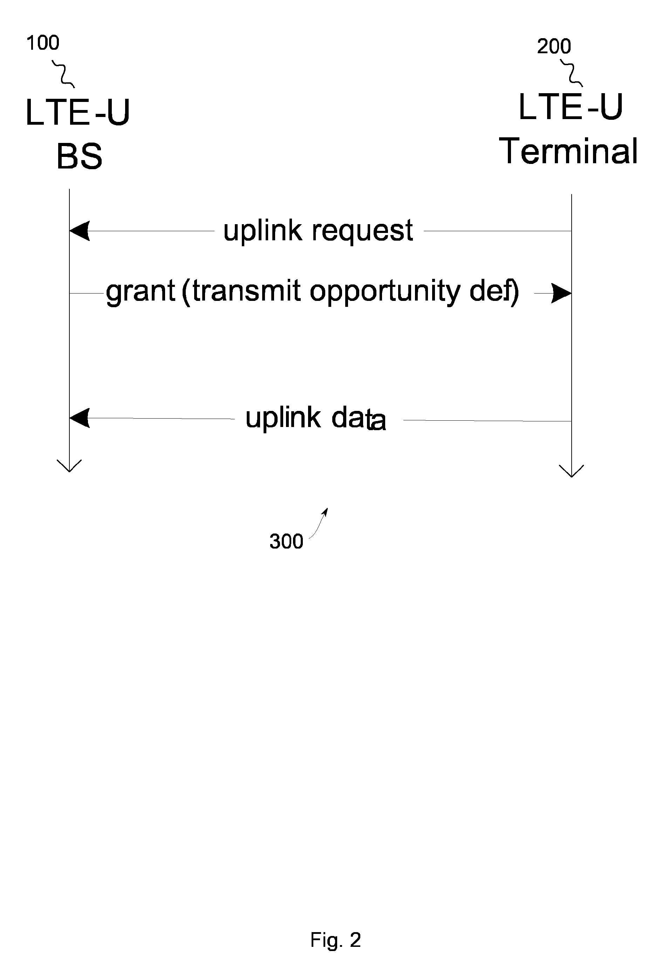

If an LTE-U terminal wants to send data in uplink direction, it may first initiate an uplink transmission procedure. This is illustrated in Fig. 2. Fig. 2 illustrates an uplink grant procedure in an embodiment, where an LTE-U base station transceiver 100 is shown on the left hand side and an LTE-U mobile transceiver 200 is shown on the right hand side. The mobile transceiver 200 sends an uplink request (information related to an uplink transmission request). Then the LTE-U base station transceiver 100 responds with a grant (information related to a set of radio resources for uplink transmission). This grant includes the definition of the reserved radio resources for the uplink transmission of a particular LTE-U terminal 200, like sub-frame-number, resource blocks, component carrier, etc. Despite to a regulate LTE uplink procedure, the LTE-U terminal 200, which wants to send data in uplink direction, performs first a Clear Carrier Assessment (CCA) to fulfill the regulations for unlicensed bands access. CCA means that the terminal first senses the air interfaces for radio power and starts transmission only if it detects no power. In such an embodiment the control module 24 of the mobile transceiver apparatus 20 is configured to carry out a clear carrier assessment to check the radio resources before data transmission, based on a carrier related to the information related to the radio resources. A transmission attempt fails if the clear carrier assessment determines the carrier to be unavailable. If the radio channel is clear, the LTE-U terminal 200 may start sending data according to the definitions in the previous received grant. If the LTE-U terminal 200 detects radio power during CCA procedure, LTE-U terminal may cancel the transmit procedure which results in a failed uplink transmit procedure. Embodiments may reduce the probability of failed uplink transmit procedures in an LTE-U (or 5G-U) system 300.

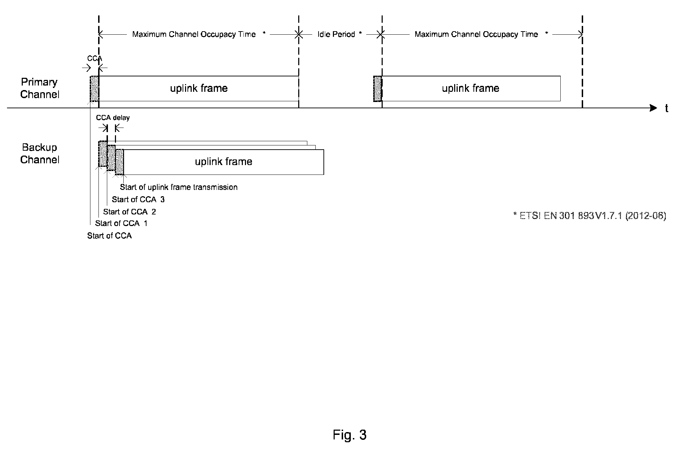

In an LTE-U system 300 uplink transmit processes may fail due to a failed CCA. Furthermore, an LTE-U system 300 may fulfill the requirements of regional regulators. In some regions, e.g. Europe and Japan, Discontinuous Transmission (DTX) and Listen Before Talk (LBT) protocol is mandatory. So data transmission in uplink and downlink direction has to be performed on a frame basis with idle periods in between. Before any frame transmission, an LBT process may be performed and transmission may only be allowed if the LBT was successful. Fig. 3 illustrates an uplink frame timing in an embodiment. Fig. 3 illustrates a time axis pointing from the left to the right and indicating radio frames of a primary channel (primary radio resource) and on a secondary channel (secondary radio resource). Fig. 3 illustrates a maximum channel occupancy time according to ETSI EN 301 893 V1.7.1 (2012-06) and an idle period between to channel accesses. Fig. 3 further shows a backup channel (secondary radio resource) on which multiple uplink frames with different delays are indicated. On both channels, the primary channel and the backup channel, CCA are performed which result in short durations before the actual data transmission, which are reserved for CCA.

Depending on when the CCA starts different delays for the actual transmission yield, as indicated for the backup channel in Fig. 3.

In further embodiments there may be further requirements, boundary conditions, or rules, which could be mandatory or useful for uplink data transmission in unlicensed bands. For example, channel alignment may be carried out to avoid unnecessary interference between LTE-U nodes and Wifi nodes, the channel layout (center frequency, channel size, guard bands, etc.) can be aligned to the specifications in 802.11. Some regulations concern DTX, CCA, and LBT. LTE-U UE's may have to perform CCA and LBT before sending a data frame in uplink direction. LTE-U base station transceivers may have to generate uplink transmit opportunities which fulfill regulations. Uplink data may have to be transmitted on a frame basis DTX, frames shall not exceed the maximum channel occupancy time and the base station transceiver may have to leave a channel idle for a given time period before transmitting a new frame as specified in ETSI EN 301 893 V1.7.1. Furthermore, fair resource sharing, "be a good neighbor", "behave like a Wifi access point", may be other requirements. An LTE-U system 300 may have to share the radio resources in unlicensed bands with WiFi network nodes and other LTE-U systems in a fair manner. A base station transceiver's scheduler shall not reserve permanently all available radio resources on all channels in the unlicensed spectrums.

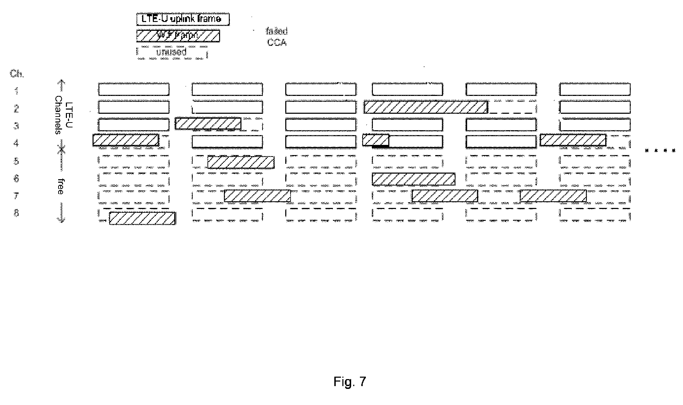

In embodiments, to share the radio resources a BS scheduler may use only a subset of all available channels, so other wireless network nodes can use these remaining resources. But Wifi nodes may not be aware of this type of resource sharing. Some of the remaining channels might not be used, in some cases, neither by the LTE-U nodes nor by the Wifi nodes. Furthermore the Wifi nodes may use the same channels as the LTE-U nodes, which may lead to failed CCA's and failed LTE-U uplink transmit processes, which will be further detailed using Fig. 7 in the sequel.

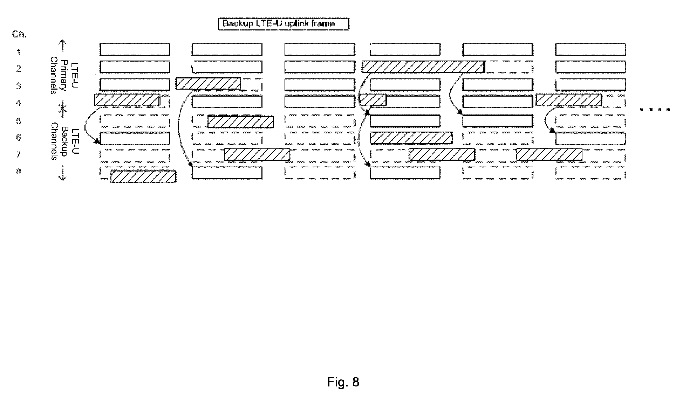

Embodiments are based on the finding that a BS 100 sends an "extended grant" (information related to a set of radio resources for uplink transmission) to a UE 200. This extended grant may contain a "primary Transmit Opportunity" pTO (primary radio resource) and one or more "backup Transmit Opportunities" bTO (secondary radio resource). This mechanism gives the UE 200 the chance to transmit its uplink data on the backup Transmit Opportunity bTO, if the CCA fails for the primary Transmit Opportunity pTO as will be further described with the help of Fig. 8.

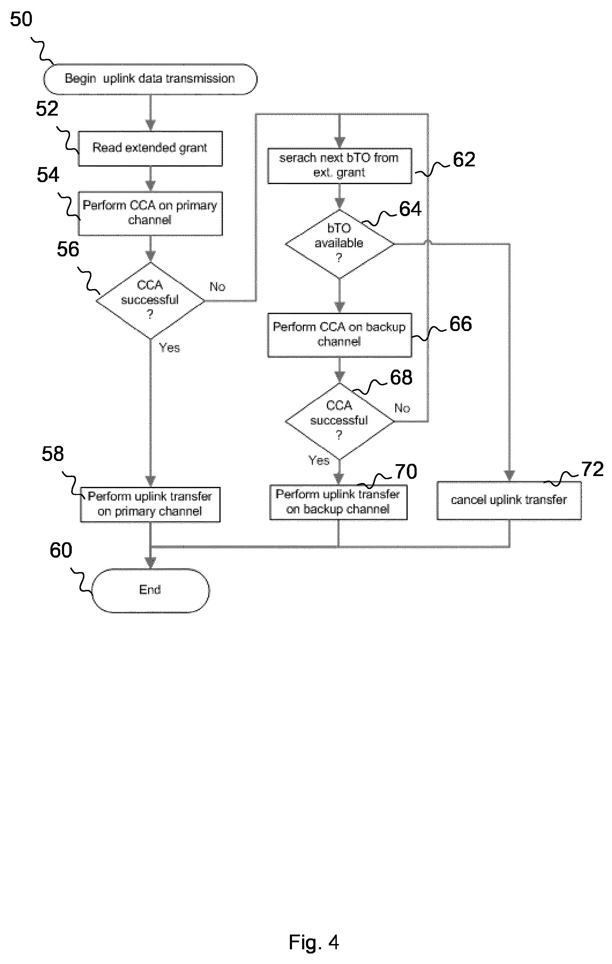

Fig. 4 shows a block diagram of a flow chart of an embodiment of a method for a base station transceiver and a mobile transceiver. The method starts in step 50, where the uplink data transmission procedure begins. In step 52 the extended grant from the base station transceiver 100 is read by the mobile transceiver 200. CCA can then be performed in step 54 on the primary channel. In step 56 it is determined whether CCA was successful - in case it was, uplink transmission can be carried out on the primary channel in line with step 58 before the procedure ends in step 60. In case CCA in step 56 is not successful the next bTO from the extended grant can be searched in step 62 and verified that another bTO is available in step 64. Accordingly, in case another bTO is available, CCA on the other bTO can be carried out in step 66 and in case it is successful (step 68), uplink transfer can be performed on the respective bTO in step 70. In case CCA fails in step 68 the next bTO can be searched in step 62 from the extended grant until the uplink transfer was successful or until no further bTO is available.

If no further bTO is available in step 64 the uplink transfer is cancelled in step 72 and the procedure ends in step 60. In this embodiment the information related to the set of radio resources (extended grant) comprises information related to at least one further radio resource (more than one bTO) for at least one further access attempt of the mobile transceiver 200 in case the second access attempt fails (steps 62, 64, 66). In this embodiment the control module 24 of the mobile transceiver apparatus 20 is configured to obtain information related to a new set of radio resources in case all transmission attempts based on the information related to the set of radio resources failed. For example, it may transmit information related to a new uplink transmission request to the one or more base station transceivers 100. For example, the base station transceiver 100 may notice that the uplink transmission granted (extended grant) has not been received and hence issue a new (extended) grant.

In another embodiment the BS 100 defines a list of all 20MHz channels in the 5GHz spectrums which are supported by the connected UEs 200. The BS 100 scheduler assigns a subset of all channels as primary channels and the remaining channels as backup channels.

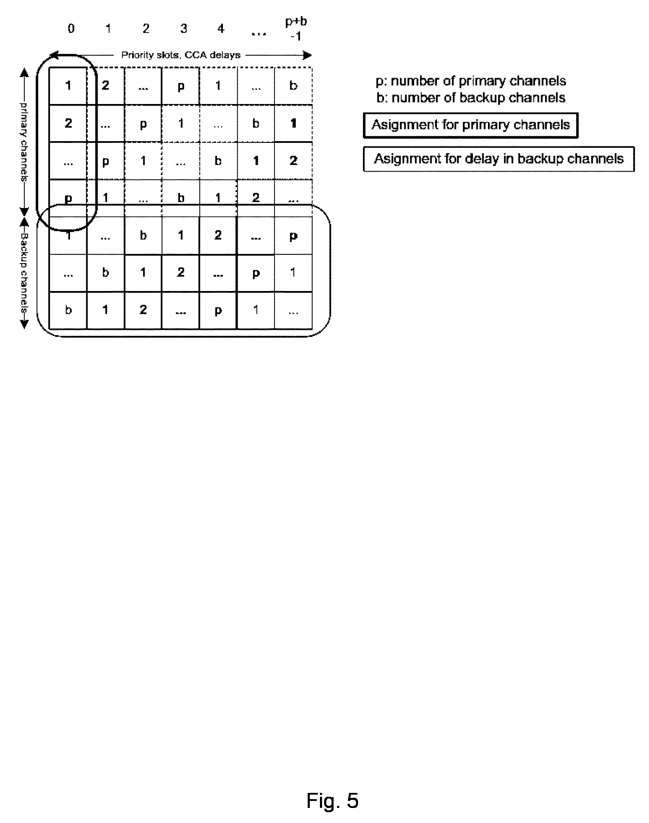

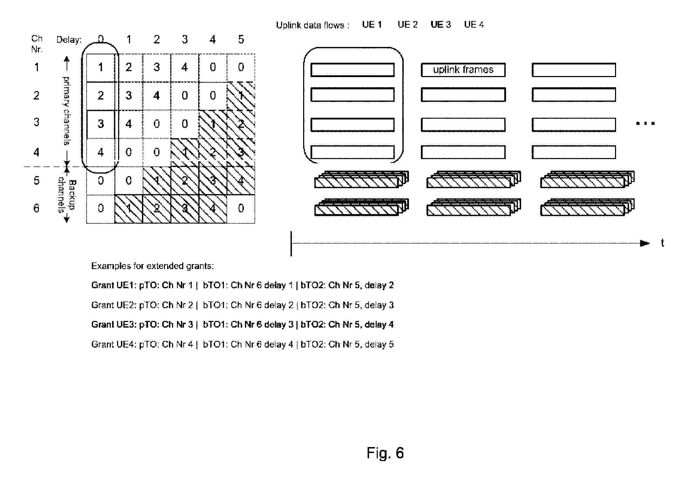

Fig. 5 shows a scheme for channel and delay configuration in an embodiment. Fig. 5 illustrates a grid where a time axis progresses to the right in time slots and a frequency carrier axis progresses to the bottom in channels. From top to bottom the first p carriers are primary channels or radio resources and the next b carriers are backup channels (secondary radio resources). As further shown in Fig. 5 there is a rotation scheme across the time slots such that every other time slot another channel becomes the first primary channels, the first backup channel, respectively. The respective CCA delays then develop with the rotation scheme. Fig. 6 illustrates a generation of an extended grant in an embodiment. Fig. 6 shows a grid similar to the one depicted in Fig. 5 on left hand side. The hachured cells in the grid indicated the backup channels or secondary radio resources. At the bottom of Fig. 6 different extended grants are indicated for different UEs, UE1, UE2, UE3, and UE 4. The corresponding UE data flows are shown on the right of Fig. 6, again developing along the time axis. For example, UE1 has pTO channel 1, bTO1 channel 6 with delay 1, and bTO2 channel 5 with delay 2, UE2 has pTO channel 2, bTO1 channel 6 with delay 2, and bTO2 channel 5 with delay 3, UE3 has pTO channel 3, bTO1 channel 6 with delay 3, and bTO2 channel 5 with delay 4, UE4 has pTO channel 4, bTO1 channel 6 with delay 4, and bTO2 channel 5 with delay 5, etc.

Fig. 7 shows LTE-U and Wifi traffic static channel assignment in an embodiment. Again a channel (to the bottom) versus radio frame grid (to the right) is shown in line with the above. Unused frames are indicated by broken lines, WiFi frames are indicated by solid lines, and LTE-U uplink frames which are shaded. CCA fails, i.e. detection of an unvailable resources, is indicated by the flash symbols. Fig. 7 shall indicate a typical scenario in unlicensed spectrum with co-existing LTE-U and WiFi.

Fig. 8 shows redundant LTE-U and Wifi traffic static channel assignment in an embodiment, in which the arrows indicate the backup radio resource and subsequent access attempts by the UEs. The flash symbols indicate CCA fails and the arrows indicate the fallback attempts.

When the BS 100 receives an uplink transmit request from a particular UE 200, the BS 100 defines a primary Transmit Opportunity and a corresponding backup Transmit Opportunity, cf. Figs. 3, 4, 5, 6, 8. The BS 100 may then send a grant to the UE 200, which includes information of both transmit opportunities, primary and backup(s). According to the received information, the UE 200 transmits its data in uplink direction. At first the UE tries to send the uplink data on the primary channel. Before sending the UE 200 performs a CCA. If the CCA fails, the UE 200 suppresses uplink transmission on this channel and tries to send the data on the backup channel(s). Before sending on the backup channel, the UE 200 performs also a CCA and sends data only if the CCA was successful. More than one backup transmit opportunities may by defined in one unlink grant. If the CCA processes on all backup transmit opportunities fail, the uplink process has to be deferred, cf. step 72 in Fig. 4. The UE 200 may then request for a new grant or the BS 100 detects the missing uplink data transfer and may send a new grant. The transmit opportunities on the backup channels are delayed relative to the TOs, cf. Fig. 3. The secondary resources indicate radio resources which are delayed with respect to the primary radio resources.

The LTE-U BS100 may include and maintain a list of all 20MHz channels (Ch) in the 5GHz spectrums, which are supported by the connected UEs 200. The LTE-U UEs 200 may report their supported channels to the BS 00 during network entry. The BS 100 scheduler assigns a subset of all channels as primary channels pCh and the remaining channels as backup channels bCh, cf. Fig. 5.

$$Ch = pCh + bCh$$

When the BS 100 receives an uplink transmit request from a particular UE 200, the BS 100 defines an "extended grant" which includes a primary Transmit Opportunity and one or more corresponding backup Transmit Opportunities for this request.

The algorithm for the definition of this extended grant may follow following rules in some embodiments:

The pTO may contain a definition for an uplink frame on one channel out of the list of primary channels. The definition may include all information elements, among other, which defines this TO clearly, e.g. start time, length, channel number, etc. Furthermore it may contain definitions for one or more bTO(s). The start time of a bTO(s) is the same as the start time of the pTO plus a delay of one or a multiple of a CCA length, cf. Fig. 3.

At first a UE 200 may try to send the uplink data on the primary channel. Before sending the UE 200 performs a CCA. If the CCA fails, the UE 200 cancels unlink transmission on the primary channel pCh and tries to send the data on the backup channel bCh. Before sending on the backup channel, the UE 200 may perform also a CCA and sends data only if the CCA was successful. If the CCA fails again, the UE 200 tries to send according to the next given bTO (cf, Fig. 4 steps 62, 64, 66, 68, flowchart uplink transmit procedure). If the CCA processes failed on all bTO's, the complete uplink process fails and the UE 200 then requests for a new grant or the BS 100 detects the missing uplink data transfer and sends a new grant. Every bTO starts with an additional delay relative to the pTO or previous bTO. The delay length may be one or a multiple of a CCA length.

The content of the extended grant is defined according to the following rules in another embodiment:

- An extended grant contains one pTO and one or more bTOs: Extended Grant (pTO, bTO 1, bTO 2, ..., bTO n)
- The number of bTOs is identical with the number of available backup channels: number of bTO = number of bCh
- Every extended grand contains bTOs for all available bChs to achieve the best utilization of all available backup channels. To avoid collisions within the backup channels, the delays of the bTOs for the same bCh at the same start time have to be unequal. So if two or more UEs try to send on the same bCh, the first (shortest delay) detects a successful CCA and starts transmission, while the others get failed CCA's and try to use next pTO, if available, cf. Fig. 3.
- Fig. 5 shows a scheme for defining the pTO and bTO with corresponding delay, which fulfill the previous described rules. Other algorithms may be possible in other embodiments, which fulfill the previous described rules. Fig. 6 shows an example of the previously described scheme with 4 primary channels and 2 backup channels.

- The BS 100 scheduler may dynamically change the number and assignment of primary channels and backup channels. The adaptation of primary channels and backup channels may depend on the actual traffic characteristic and number of failed uplink procedures (failed CCA's).

In further embodiments the following rules may be supported:

- BS 100 may sense Wifi traffic within its cell range to analyze utilization of channels
- BS 100 may perform statistics about failed uplink transmit procedure to estimate channel utilization.
- BS 100 may prefer channels with less or no Wifi traffic, e.g. low number of failed uplink transmit procedures.

For example, the control module 14 of the base station transceiver apparatus 20 may be configured to adapt a number of further resources for further access attempts comprised in the information related to the set of radio resources based on information related to a load condition of the first and second frequency carriers. The control module 14 may be configured to determine the information related to the load condition of the first and second frequency carriers based on monitoring successful access attempts of the one or more mobile transceivers 200 on the first and second frequency carriers. In some embodiments the control module 14 is configured to receive information related to an uplink transmission request from multiple mobile transceivers 200. The control module 14 may be configured to transmit information related to multiple sets of radio resources for uplink transmission to the multiple mobile transceivers. The control module 14 may be further configured to sense activity of transceivers of another mobile communication system on the first and second frequency carriers and to determine the information related to the set of radio resources based on the activity on the first and second frequency carriers.

With the above described mechanisms in embodiments the uplink data transport may be improved, because the probability for failed uplink transmit procedures is reduced. The avoidance or reduction of failed and repeated uplink procedures may improve the real time behavior of LTE-U uplink, Figs. 7 and 8.

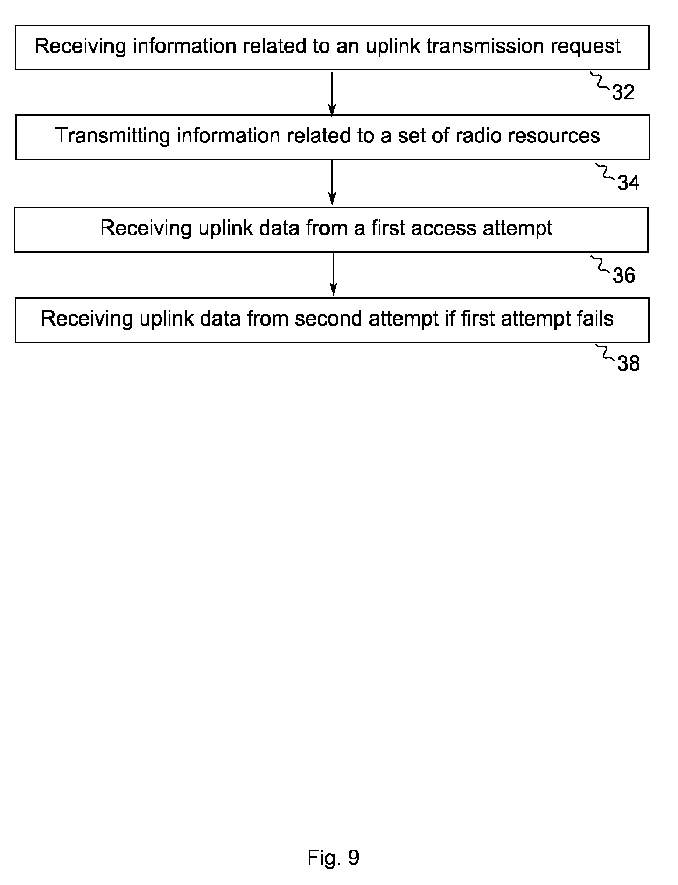

Fig. 9 shows a block diagram of a flow chart of an embodiment of a method for a base station transceiver 100 of a mobile communication system 300. The base station transceiver 100 is configured to serve one or more mobile transceivers 200 of the mobile communication system 300 using at least a first frequency carrier and a second frequency carrier. The method comprises receiving 32 information related to an uplink transmission request from a mobile transceiver 200. The method further comprises transmitting 34 information related to a set of radio resources for uplink transmission to the mobile transceiver 200. The information related to the set of radio resources comprises information related to primary radio resources for a first uplink access attempt of the mobile transceiver 200 on the first frequency carrier. The information related to the set of radio resources comprises information related to secondary radio resources for a second uplink access attempt of the mobile transceiver 200 on the second frequency carrier in case the first uplink access attempt fails. The method further comprises receiving 36 uplink data from the mobile transceiver 200 on the primary radio resources from the first uplink access attempt of the mobile transceiver 200 or receiving 38 the uplink data from the mobile transceiver 200 on the secondary radio resources from the second uplink access attempt of the mobile transceiver 200 in case the first uplink access attempt fails.

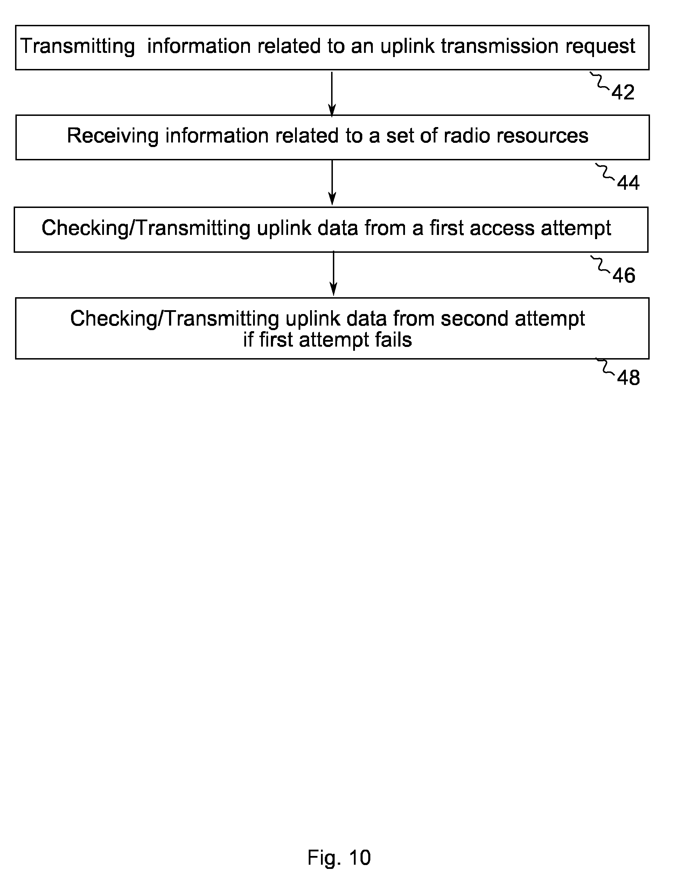

Fig. 10 shows a block diagram of a flow chart of an embodiment of a method for a mobile transceiver 200 of a mobile communication system 300. The mobile transceiver 200 is configured to be served by one or more base station transceivers 100 of the mobile communication system 300 using at least a first frequency carrier and a second frequency carrier. The method comprises transmitting 42 information related to an uplink transmission request to the one or more base station transceivers 100. The method further comprises receiving 44 information related to a set of radio resources for uplink transmission from the one or more base station transceivers 100. The information related to the set of radio resources comprises information related to primary radio resources for a first uplink access attempt of the mobile transceiver 200, and the information related to the set of radio resources comprises information related to secondary radio resources for a second uplink access attempt of the mobile transceiver 200 in case the first uplink access attempt fails. The method further comprises checking 46 whether the primary radio resources are available for transmission and transmitting uplink data to the one or more base station transceivers 100 on the primary radio resources for the first uplink access attempt if the primary radio resources are available. The method further comprises, if the primary radio resources are not available for transmission, checking 48 whether the secondary radio resources are available for transmission and transmitting the uplink data to the one or more base station transceivers 100 on the secondary radio resources for the second uplink access attempt in case the first uplink transmission attempt fails and the secondary radio resources are available for transmission.

Another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for a base station transceiver (100) of a mobile communication system (300), the base station transceiver (100) being configured to serve one or more mobile transceivers (200) of the mobile communication system (300) using at least a first frequency carrier and a second frequency carrier, the apparatus (10) comprising
   a transceiver module (12) to wirelessly communicate with the one or more mobile transceivers (200); and
   a control module (14) to

   control the transceiver module (12) to transmit data to the one or more mobile transceivers (200) and receive data from the one or more mobile transceivers (200),
   receive information related to an uplink transmission request from a mobile transceiver (200),
   transmit information related to a set of radio resources for uplink transmission to the mobile transceiver (200), wherein the information related to the set of radio resources comprises information related to primary radio resources for a first uplink access attempt of the mobile transceiver (200) on the first frequency carrier, and wherein the information related to the set of radio resources comprises information related to secondary radio resources for a second uplink access attempt of the mobile transceiver (200) on the second frequency carrier in case the first uplink access attempt fails, and

   receive uplink data from the mobile transceiver (200) on the primary radio resources from the first uplink access attempt of the mobile transceiver (200) or receive the uplink data from the mobile transceiver (200) on the secondary radio resources from the second uplink access attempt of the mobile transceiver (200) in case the first uplink access attempt fails.

2. The apparatus (10) of claim 1, wherein at least one of the first and second frequency carriers lies in an unlicensed spectrum.

3. The apparatus (10) of claim 1, wherein the information related to the set of radio resources comprises information related to at least one further radio resource for at least one further access attempt of the mobile transceiver (200) in case the second transmission attempt fails.

4. The apparatus (10) of claim 3, wherein the control module (14) is configured to adapt a number of further resources for further access attempts comprised in the information related to the set of radio resources based on information related to a load condition of the first and second frequency carriers.

5. The apparatus (10) of claim 4, wherein the control module (14) is configured to determine the information related to the load condition of the first and second frequency carriers based on monitoring successful access attempts of the one or more mobile transceivers (200) on the first and second frequency carriers.

6. The apparatus (10) of claim 1, wherein at least one of the primary radio resources and the secondary radio resources comprises information related to one or more channels available on the first or second frequency carrier, and /or wherein the secondary resources indicate radio resources which are delayed with respect to the primary radio resources.

7. The apparatus (10) of claim 1, wherein the control module (14) is configured to receive information related to an uplink transmission request from multiple mobile transceivers (200), and wherein the control module (14) is configured to transmit information related to multiple sets of radio resources for uplink transmission to the multiple mobile transceivers, and/or wherein the control module (14) is further configured to sense activity of transceivers of another mobile communication system on the first and second frequency carriers and to determine the information related to the set of radio resources based on the activity on the first and second frequency carriers.

**8.** An apparatus (20) for a mobile transceiver (200) of a mobile communication system (300), the mobile transceiver (200) being configured to be served by one or more base station transceivers (100) of the mobile communication system (300) using at least a first frequency carrier and a second frequency carrier, the apparatus (20) comprising

a transceiver module (22) to wirelessly communicate with the one or more base station transceivers (100); and

a control module (24) to

control the transceiver module (22) to transmit data to the one or more base station transceivers (100) and receive data from the one or more base station transceivers (100),

transmit information related to an uplink transmission request to the one or more base station transceivers (100),

receive information related to a set of radio resources for uplink transmission from the one or more base station transceivers (100), wherein the information related to the set of radio resources comprises information related to primary radio resources for a first uplink access attempt of the mobile transceiver (200), and wherein the information related to the set of radio resources comprises information related to secondary radio resources for a second uplink access attempt of the mobile transceiver (200) in case the first uplink access attempt fails, and

check whether the primary radio resources are available for transmission and transmit uplink data to the one or more base station transceivers (100) on the primary radio resources for the first uplink access attempt if the primary radio resources are available, and,

if the primary radio resources are not available for transmission, check whether the secondary radio resources are available for transmission and transmit the uplink data to the one or more base station transceivers (100) on the secondary radio resources for the second uplink access attempt in case the first uplink transmission attempt fails and the secondary radio resources are available for transmission.

**9.** The apparatus (20) of claim 8, wherein at least one of the first and second frequency carriers lies in an unlicensed spectrum.

**10.** The apparatus (20) of claim 8, wherein the information related to the set of radio resources comprises information related to at least one further radio resource for at least one further access attempt of the mobile transceiver (200) in case the second access attempt fails.

**11.** The apparatus (20) of claim 8, wherein the control module (24) is configured to carry out a clear carrier assessment to check the radio resources before data transmission based on a carrier related to the information related to the radio resources, and wherein a transmission attempt fails if the clear carrier assessment determines the carrier to be unavailable.

**12.** The apparatus (20) of claim 8, wherein the control module (24) is configured to obtain information related to a new set of radio resources in case all transmission attempts based on the information related to the set of radio resources failed.

**13.** A method for a base station transceiver (100) of a mobile communication system (300), the base station transceivers (100) being configured to serve one or more mobile transceiver (200) of the mobile communication system (300) using at least a first frequency carrier and a second frequency carrier, the method comprising

receiving (32) information related to an uplink transmission request from a mobile transceiver (200),

transmitting (34) information related to a set of radio resources for uplink transmission to the mobile transceiver (200), wherein the information related to the set of radio resources comprises information related to primary radio resources for a first uplink access attempt of the mobile transceiver (200) on the first frequency carrier, and wherein the information related to the set of radio resources comprises information related to secondary radio resources for a second uplink access attempt of the mobile transceiver (200) on the second frequency carrier in case the first uplink access attempt fails, and

receiving (36) uplink data from the mobile transceiver (200) on the primary radio resources from the first uplink access attempt of the mobile transceiver (200) or receiving (38) the uplink data from the mobile transceiver (200) on the secondary radio resources from the second uplink access attempt of the mobile transceiver (200) in case the first uplink access attempt fails.

**14.** A method for a mobile transceiver (200) of a mobile communication system (300), the mobile transceiver (200) being configured to be served by one or more base station transceivers (100) of the mobile communication system using at least a first frequency carrier and a second frequency carrier, the method comprising

transmitting (42) information related to an uplink transmission request to the one or more base station transceivers (100),

receiving (44) information related to a set of radio resources for uplink transmission from the one or more base station transceivers (100), wherein the information related to the set of radio resources comprises information related to primary radio resources for a first uplink access attempt of the mobile transceiver (200), and wherein the information related to the set of radio resources comprises information related to secondary radio resources for a second uplink access attempt of the mobile transceiver (200) in case the first uplink access attempt fails, and checking (46) whether the primary radio resources are available for transmission and transmitting uplink data to the one or more base station transceivers (100) on the primary radio resources for the first uplink access attempt if the primary radio resources are available, and,

if the primary radio resources are not available for transmission, checking (48) whether the secondary radio resources are available for transmission and transmitting the uplink data to the one or more base station transceivers (100) on the secondary radio resources for the second uplink access attempt in case the first uplink transmission attempt fails and the secondary radio resources are available for transmission.

15. A computer program having a program code for performing at least one of the methods of claims 13 or 14, when the computer program is executed on a computer, a processor, or a programmable hardware component.

Information related to primary and secondary radio ressources

Fig. 1

100

LTE-U
BS

200

LTE-U
Terminal

◄——————— uplink request ———————

——— grant (transmit opportunity def) ——►

◄————————— uplink data —————————

300

Fig. 2

CCA

Primary
Channel

Maximum Channel Occupacy Time *

Idle Period *

Maximum Channel Occupacy Time *

uplink frame

uplink frame

t

CCA delay

Backup
Channel

uplink frame

Start of uplink frame transmission

Start of CCA 3

Start of CCA 2

Start of CCA 1

Start of CCA

* ETSI EN 301 893V1.7.1 (2012-06)

Fig. 3

Fig. 4

p: number of primary channels
b: number of backup channels

Asignment for primary channels

Asignment for delay in backup channels

Fig. 5

Examples for extended grants:

Grant UE1: pTO: Ch Nr 1 | bTO1: Ch Nr 6 delay 1 | bTO2: Ch Nr 5, delay 2

Grant UE2: pTO: Ch Nr 2 | bTO1: Ch Nr 6 delay 2 | bTO2: Ch Nr 5, delay 3

**Grant UE3: pTO: Ch Nr 3 | bTO1: Ch Nr 6 delay 3 | bTO2: Ch Nr 5, delay 4**

Grant UE4: pTO: Ch Nr 4 | bTO1: Ch Nr 6 delay 4 | bTO2: Ch Nr 5, delay 5

Fig. 6

Fig. 7

Fig. 8

Receiving information related to an uplink transmission request

~32

Transmitting information related to a set of radio resources

~34

Receiving uplink data from a first access attempt

~36

Receiving uplink data from second attempt if first attempt fails

~38

Fig. 9

Transmitting information related to an uplink transmission request

↳42

Receiving information related to a set of radio resources

↳44

Checking/Transmitting uplink data from a first access attempt

↳46

Checking/Transmitting uplink data from second attempt
if first attempt fails

↳48

Fig. 10

**EUROPEAN SEARCH REPORT**

Application Number

EP 16 30 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Discussion on random access procedure for eLAA", 3GPP DRAFT; R1-164749, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096334, Retrieved from the Internet: URL:http://www.3gpp.org/ftp/tsg_ran/WG1_RL 1/TSGR1_85/Docs/ [retrieved on 2016-05-14] | 1-3,6, 8-10, 13-15 | INV. H04W74/08 |
| Y A | * Section 2.1 "Existing L1 random access procedure"; Section 2.2 "Enhanced L1 random access procedure"; figures 2(a), 2(b), 3 * ----- | 7,11,12 4,5 | |

-/--

| | |
|---|---|
| | TECHNICAL FIELDS SEARCHED (IPC) |
| | H04W |

The present search report has been drawn up for all claims

| Place of search | Date of completion of the search | Examiner |
|---|---|---|
| The Hague | 14 November 2016 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 30 5628

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NTT DOCOMO ET AL: "Discussion on PRACH for eLAA UL", 3GPP DRAFT; R1-165189 DISCUSSION ON PRACH FOR ELAA UL_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing; 20160523 - 20160527 14 May 2016 (2016-05-14), XP051089816, Retrieved from the Internet: URL:http://www.3gpp.org/ftp/tsg_ran/WG1_RL1/TSGR1_85/Docs/ [retrieved on 2016-05-14] | 1-3,6, 8-10, 13-15 | |
| Y A | * Section 4 "Enhancements for Random Access Procedure; figures 3-2 * | 7,11,12 4,5 | |
| Y A | US 2015/071220 A1 (LUO TAO [US] ET AL) 12 March 2015 (2015-03-12) * paragraphs [0111] - [0118]; figure 6 * | 7,11,12 1-6, 8-10, 13-15 | TECHNICAL FIELDS SEARCHED (IPC) |

The present search report has been drawn up for all claims

| Place of search | Date of completion of the search | Examiner |
|---|---|---|
| The Hague | 14 November 2016 | Stefan, Andrei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 5628

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2016

| Patent document cited in search report | Publication date | Patent family member(s) | Publication date |
|---|---|---|---|
| US 2015071220 A1 | 12-03-2015 | CN 105531958 A<br>EP 3044899 A1<br>KR 20160055846 A<br>US 2015071220 A1<br>WO 2015038908 A1 | 27-04-2016<br>20-07-2016<br>18-05-2016<br>12-03-2015<br>19-03-2015 |

EPO FORM P0459

For more details about this annex : see Official Journal of the European Patent Office, No. 12/82